# EUROPÄISCHE PATENTSCHRIFT

(11) **EP 1 973 346 B1**
(45) Veröffentlichungstag und Bekanntmachung des Hinweises auf die Patenterteilung: **14.01.2009**
(21) Anmeldenummer: 07104616.3
(22) Anmeldetag: 21.03.2007
(51) Int. Cl.: H04N 5/74, F16M 11/24, G03B 21/56, G03B 21/14

(54) **Anzeigeeinrichtung**
Display device
Dispositif d'affichage

(43) Veröffentlichungstag der Anmeldung: 24.09.2008
(73) Patentinhaber: Anyma GmbH und Co Kg, 33102 Paderborn (DE)
(72) Erfinder: Bökamp, Robert, D-33104 Paderborn (DE); Mertens, Norbert, D-37671 Höxter (DE)
(74) Vertreter: von Kirschbaum, Alexander

(56) Entgegenhaltungen:
- EP-A- 1 785 064
- WO-A-20/07023246
- DE-U1-6202005 016 92

## Beschreibung

Die Erfindung betrifft eine Anzeigeeinrichtung.

Derartige Anzeigeeinrichtungen weisen eine beschreibbare, höhenverstellbare Anzeigetafel auf. Hierbei kann es sich beispielsweise um eine Infotafel oder Schultafel handeln, die mit Stiften oder Kreide beschrieben werden kann. Zusätzlich weist die Anzeigeeinrichtung eine ebenfalls höhenverstellbare Projektionseinrichtung auf. Mit Hilfe der Projektionseinrichtung, bei der es sich insbesondere um einen Beamer handelt, können Bilder auf die Anzeigetafel projiziert werden. Bei den Bildern handelt es sich beispielsweise um stehende Bilder, Filme, projizierte Bildschirmdarstellungen und dergleichen.

Eine derartige Anzeigeeinrichtung ist in DE 20 2005 016 926 beschrieben. Grundsätzlich besteht bei derartigen Anzeigeeinrichtungen die Problematik, dass bei einer Höhenverstellung der Anzeigetafel ein Verschieben der Bilder auf der Anzeigetafel und ggf. eine Verzehrung der projizierten Bilder erfolgt. Zur Vermeidung derartiger Störungen ist in DE 20 2005 016 926 vorgeschlagen, sowohl die Anzeigetafel als auch die Projektionseinrichtung mit einem motorischen Antrieb zur Höhenverstellung zu verbinden. Die beiden motorischen Antriebe zur Höhenverstellung sind mit einer Steuerung verbunden, wobei durch die Steuerung sichergestellt ist, dass die beiden Verstellwege gleich sind. Eine derartige Anzeigeeinrichtung weist den Nachteil auf, dass sie träge ist. Ferner besteht das Problem, dass beim Einschalten des Elektromotors plötzlich Kräfte auf die Projektionseinrichtung übertragen werden. Dies führt zu einem Wackeln der Projektionseinrichtung.

Aus WO 2007/023246 ist ferner eine Anzeigeeinrichtung bekannt, bei der eine Projektionseinrichtung über einen starren Kragarm mit der Anzeigtafel verbunden ist. Die Projektionseinrichtung ist zusammen mit der Tafel über die gemeinsame Verschiebeinrichtung an einer Wand befestigt und gemeinsam vorschiebbar.

Aufgabe der Erfindung ist es eine Anzeigeeinrichtung zu schaffen, bei der auf einfache Weise sichergestellt ist, dass ein Verschieben der Anzeigetafel oder der Projektionseinrichtung zu einem entsprechende Verschieben der Projektionseinrichtung bzw. der Anzeigetafel führt.

Die Lösung der Aufgabe erfolgt erfindungsgemäß durch die Merkmale des Anspruchs 1.

Die erfindungsgemäße Anzeigeeinrichtung weist eine beschreibbare, höhenverstellbare Anzeigetafel auf. Ferner weist die Anzeigeeinrichtung eine höhenverstellbare Projektionseinrichtung zum projizieren von insbesondere stehenden oder bewegten Bildern auf die Anzeigetafel auf. Erfindungsgemäß ist eine mechanische Verbindungseinrichtung vorgesehen, durch die die Anzeigetafel mit der Projektionseinrichtung mechanisch verbunden ist. Erfindungsgemäß ist die Verbindungseinrichtung derart ausgebildet, dass bei Verschieben der Anzeigetafel oder der Projektionseinrichtung ein vertikaler Abstand zwischen der Projektionseinrichtung und der Anzeigetafel im Wesentlichen erhalten bleibt. Ein Verschieben der Anzeigetafel in vertikaler Richtung um eine bestimmte Strecke bewirkt somit ebenfalls ein Verschieben der Projektionseinrichtung um die selbe Strecke in vertikaler Richtung. Die Anzeigetafel und die Projektionseinrichtung sind somit stets auf der selben Höhe zueinander angeordnet. Dies erfolgt erfindungsgemäß ausschließlich auf Grund der vorgesehenen mechanischen Verbindungseinrichtung. Es handelt sich somit vereinfacht ausgedrückt um ein durch die Verbindungseinrichtung bewirktes Parallelverschieben der Anzeigetafel und der Projektionseinrichtung in die selbe Richtung. Hierdurch ist sichergestellt, dass der Projektionswinkel zwischen der Projektionseinrichtung und der Anzeigetafel im Wesentlichen beibehalten bleibt. Auch das Projektionsfeld, das ist der Bereich, in dem das projizierte Bild auf der Anzeigetafel dargestellt wird, bleibt unverändert.

Auf Grund des erfindungsgemäßen Vorsehens einer mechanischen Verbindungseinrichtung ist ein aufwendiges Vorsehen von elektrischen Stellmotoren sowie einer entsprechenden Steuerung nicht erforderlich, Dies hat nicht nur den Vorteil, dass die Fehleranfälligkeit geringer ist, sondern auch dass insbesondere ein beim Anschalten eines Elektromotors auftretendes Wackeln der Projektionseinrichtung vermieden ist. Auch hat das Vorsehen einer mechanischen Verbindungseinrichtung den Vorteil, dass keine starken Elektromotoren vorgesehen werden müssen, durch die ein vertikales Verschieben der Anzeigetafel bewerkstelligt werden kann. Die erfindungsgemäße Verbindungseinrichtung ist somit kostengünstiger, zuverlässiger und weniger wartungsintensiv. Ferner kann die erfindungsgemäße Anzeigeeinrichtung nachgerüstet werden.

Bei der Verbindungseinrichtung kann es sich um ein Gestänge handeln, das zwischen der Anzeigetafel und der Projektionseinrichtung angeordnet und beispielsweise mit der Wand und/oder der Decke eines Vortragsraums verbunden ist. Durch das Vorsehen zumindest eines Umlenkelements kann sichergestellt werden, dass ein vertikales Verschieben der Anzeigetafel auch ein vertikales Verschieben der Projektionseinrichtung in dieselbe Richtung bewirkt.

Bei einer besonders bevorzugten Ausführungsform der Erfindung weist die Verbindungseinrichtung ein Umlenkelement, insbesondere eine Umlenkrolle und ein insbesondere flexibles Verbindungselement, wie ein Seil oder eine Kette auf. Hierbei ist das Verbindungselement erfindungsgemäß in bevorzugter Ausführungsform derart um das Umlenkelement herum geführt, dass hierdurch eine Richtungsänderung erfolgt. Dies kann insbesondere durch ein Umschlingen des Umlenkelements durch das flexible Verbindungselement um ca. 180° gewährleistet sein. Selbstverständlich kann das Verbindungselement beispielsweise zur Stabilisierung zusätzlich auch mehrfach vollständig um das Umlenkelement herumgeführt sein. Der Umschlingungswinkel beträgt somit 360° x + 180°.

Das Umlenkelement, bei dem es sich insbesondere um eine Umlenkrolle handelt, ist vorzugsweise stationär angeordnet. Hierzu ist das Umlenkelement beispielsweise mit einer Wand verbunden. Die Drehachse des Umlenkelements ist hierbei vorzugsweise horizontal ausgerichtet.

Ferner ist die Anzeigetafel und/oder die Projektionseinrichtung mit Führungselementen wie Führungsschienen zur vertikalen Führung verbunden. Insbesondere bei der Projektionseinrichtung ist dies vorteilhaft, um ein durch das Verschieben hervorgerufenes Pendeln oder Wackeln zu minimieren.

Nachfolgend wird die Erfindung anhand einer bevorzugten Ausführungsform unter Bezugnahme auf die anliegenden Zeichnungen näher erläutert.

Es zeigen:
- Fig. 1: eine schematische Seitenansicht einer bevorzugten Ausführungsform der Erfindung, und
- Fig. 2: eine schematische Vorderansicht der in Fig. 1 dargestellten Ausführungsform.

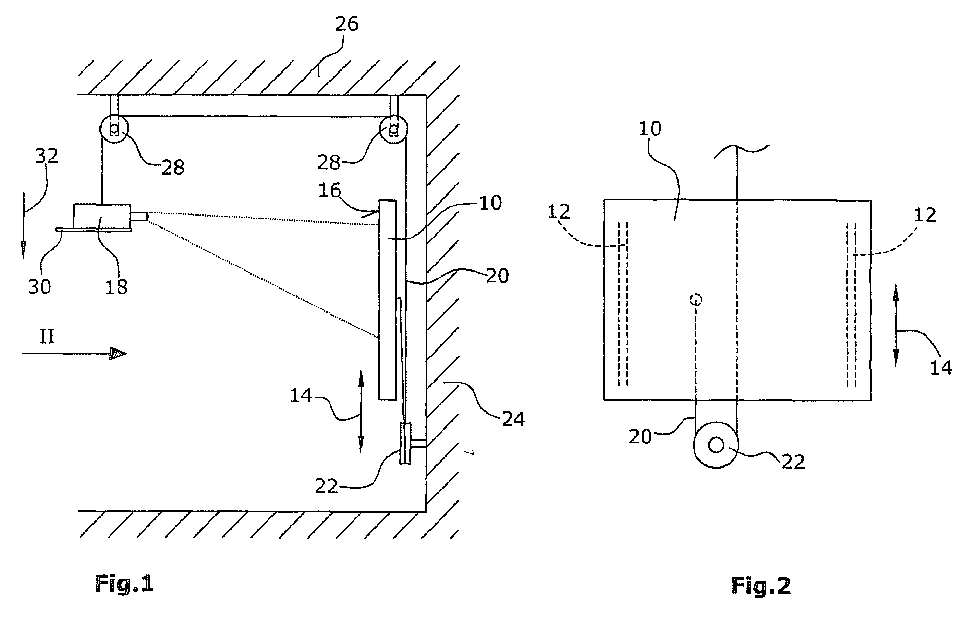

Die in den Figuren dargestellte Ausführungsform der Anzeigeeinrichtung weist eine Anzeigetafel 10 auf. Die Anzeigetafel 10 ist in Führungen 12 (Fig. 2) geführt und vertikal in Richtung eines Pfeils 14 verschiebbar. Bei der Anzeigetafel 10 handelt es sich beispielsweise um eine Infotafel oder eine Schultafel, deren Oberseite 16 mit geeigneten Stiften oder Kreide beschreibbar ist.

Ferner weist die Anzeigeeinrichtung eine Projektionseinrichtung 18 auf, mit der auf die Oberseite 16 der Anzeigeeinrichtung 10 ein Bild projiziert werden kann.

Im dargestellten Ausführungsbeispiel ist die Anzeigetafel 10 mit einem als Seil ausgebildeten Verbindungselement 20 verbunden. Das Verbindungselement 20 ist zunächst nach unten in Richtung eines Umlenkelements 22, bei dem es sich im dargestellten Ausführungsbeispiel um eine Umlenkrolle handelt, geführt. Das Seil 20 umschlingt die Umlenkrolle 22 um etwa 180° und ist sodann nach oben geführt. Die Umlenkrolle 22 ist um eine horizontale Achse drehbar und an einer Wand 24 stationär gehalten.

Das nach oben geführte Seil 20 wird über zwei weitere an einer Decke 26 stationär befestigte Umlenkrollen 28 um jeweils 90° umgelenkt, so dass das Ende des Seils 20 nach unten in Richtung der Projektionseinrichtung 18 verläuft. Das Ende des Seils 20 ist mit einer Aufnahmeeinrichtung 30, die zur Aufnahme der Projektionseinrichtung 18 dient, verbunden.

Ein Verschieben der Tafel 10 in Fig. 1 nach unten bewirkt somit dass die Projektionseinrichtung 18 ebenfalls nach unten in Richtung eines Pfeils 32 verschoben wird. Auf Grund der in diesem Ausführungsbeispiel erfolgten Seilführung erfolgt ein Verschieben der Projektionseinrichtung 18 um die selbe Strecke wie die Anzeigtafel 10.

## Patentansprüche

1. Anzeigeeinrichtung mit
einer beschreibbaren, höhenverstellbaren Anzeigetafel (10),
einer höhenverstellbaren Projektionseinrichtung (18) zum Projizieren von Bildern auf die Anzeigetafel (10), und
einer mechanischen Verbindungseinrichtung (20, 22), die die Anzeigetafel (10) mit der Projektionseinrichtung (18) verbindet, wobei die Verbindungseinrichtung (22, 22) derart ausgebildet ist, dass bei Verschieben der Anzeigetafel (10) oder der Projektionseinrichtung (18) ein vertikaler Abstand zwischen der Anzeigetafel (10) und der Projektionseinrichtung (18) im Wesentlichen erhalten bleibt,
**dadurch gekennzeichnet dass**
die Verbindungseinrichtung ein flexibles Verbindungselement (20) und ein von dem Verbindungselement (20) umschlungen Umlenkelement (22) aufweist; wobei das Verbindungselement (20) derart um das Umlenkelement (22) herum geführt ist, dass hierdurch eine Richtungsänderung erfolgt so dass durch das Vorsehen des Umlenkelements sichergestellt werden kann, dass ein vertikales Verschieben der Anzeigetafel bzw. Projektionseinrichtung auch ein vertikales Verschieben der Projektionseinrichtung bzw. Anzeigetafel in dieselbe Richtung bewirkt.

2. Anzeigeeinrichtung nach Anspruch 1, **dadurch gekennzeichnet, dass** das Umlenkelement (22) als Umlenkrolle ausgebildet ist.

3. Anzeigeeinrichtung nach Anspruch 2, **dadurch gekennzeichnet, dass** das Umlenkelement (22) im Wesentlichen um 180° von dem Verbindungselement (20) umschlungen ist.

4. Anzeigeeinrichtung nach einem der Ansprüche 2 bis 3, **dadurch gekennzeichnet, dass** das Umlenkelement (22) stationär ist.

5. Anzeigeeinrichtung nach einem der Ansprüche 2 bis 4, **dadurch gekennzeichnet, dass** das Verbindungselement (20) als Seil und/oder Kette ausgebildet ist.

6. Anzeigeeinrichtung nach einem der Ansprüche 1 bis 5, **dadurch gekennzeichnet, dass** die Anzeigetafel (10) und/oder die Projektionseinrichtung (18) mit Führungselementen (12) zur Vertikalführung verbunden sind.

## Claims

1. A display device comprising
a display board (10) adapted to be written on and adjustable in height,
a projection unit (18), adjustable in height, for projecting images onto the display board (10), and
a mechanical connection means (20,22) connecting the display board (10) to the projection unit (18), said connection means (20,22) being configured in such a manner that, upon displacement of the display board (10) or the projection unit (18), a vertical distance between the display board (10) and the projection unit (18) is substantially maintained,
**characterized in that**
the connection means comprises a flexible connection element (20) and a guide element (22) wrapped by the connection element (20), said connection element (20) being guided around said guide element (22) in such a manner that a change in direction is caused thereby, so that by providing the guide element, it can be guaranteed that a vertical displacement of the display board or the projection unit also causes a vertical displacement of the projection unit or the display board in the same direction.

2. The display device according to claim 1, wherein said connection means comprises a guide element (22) in the form of a guide pulley.

3. The display device according to claim 2, wherein said guide element (22) is wrapped by the connection element (20) by substantially 180°.

4. The display device according to one of claims 2 to 3, wherein said guide element (22) is stationary.

5. The display device according to one of claims 2 to 4, wherein said connection element (20) is formed as a rope and/or chain.

6. The display device according to one of claims 1 to 5, wherein the display board (10) and/or the projection unit (18) are connected to guide elements (12) for vertical guidance.

## Revendications

1. Dispositif d'affichage comprenant:
un tableau d'affichage (10) inscriptible et verticalement ajustable,
un moyen projecteur (18) verticalement ajustable pour projeter des images sur le tableau d'affichage (10), et
un moyen de liaison mécanique (20, 22) liant le tableau d'affichage (10) et le moyen projecteur (18), le moyen de liaison (20, 22) étant configuré tellement qu'en cas d'un déplacement du tableau d'affichage (10) ou du moyen projecteur (18), une distance verticale entre le tableau d'affichage (10) et le moyen projecteur (18) est sensiblement maintenue,
**caractérisé en ce que**
le moyen de liaison comprend un élément de liaison (20) flexible et un élément de déviation (22) enlacé par l'élément de liaison (20), l'élément de liaison (20) étant passé autour de l'élément de déviation (22) de manière qu'un changement de direction est effectué par cela, de sorte que par la provision de l'élément de déviation, il est possible d'assurer qu'un déplacement vertical du tableau d'affichage ou du moyen projecteur aussi effectue un déplacement vertical du moyen projecteur ou du tableau d'affichage dans le même sens.

2. Moyen d'affichage selon la revendication 1, **caractérisé en ce que** l'élément de déviation (22) est en forme d'une poulie de déviation.

3. Moyen d'affichage selon la revendication 2, **caractérisé en ce que** l'élément de déviation (22) est enlacé par l'élément de liaison (20) pour 180°, sensiblement.

4. Moyen d'affichage selon une des revendications 2 à 3, **caractérisé en ce que** l'élément de déviation (22) est fixe.

5. Moyen d'affichage selon une des revendications 2 à 4, **caractérisé en ce que** l'élément de liaison (20) est en forme d'un corde et/ou d'une chaîne.

6. Moyen d'affichage selon une des revendications 1 à 5, **caractérisé en ce que** le tableau d'affichage (10) et/ou le moyen projecteur (18) sont liés avec des éléments de guidage (12) pour guidage vertical.
